# EUROPÄISCHE PATENTANMELDUNG

(11) **EP 3 809 053 A1**
(43) Veröffentlichungstag der Anmeldung: **21.04.2021**
(21) Anmeldenummer: 19204198.6
(22) Anmeldetag: 18.10.2019
(51) Int. Cl.: F24F 1/01, F24F 5/00, E04B 9/02, F24D 3/16, F24F 7/013, F24F 13/24

(54) **KLIMASEGELANORDNUNG UND RAUM**

(71) Anmelder: LTG Aktiengesellschaft, 70435 Stuttgart (DE)
(72) Erfinder: WAGNER, Ralf, 70771 Leinfelden-Echtedingen (DE); HUBER, Mario, 70435 Stuttgart (DE)
(74) Vertreter: Clarenbach, Carl-Philipp

(57) **Zusammenfassung**

Die Erfindung betrifft eine Klimasegelanordnung (2) für einen eine Decke (8) aufweisenden Raum (1) eines Gebäudes, mit zumindest einem Klimasegel (7), das eine zumindest im Wesentlichen parallel zu der Decke (8) anordenbare Wärmetauscherplatte (3) und zumindest einen entlang der Wärmetauscherplatte (3) geführten und mit der Wärmetauscherplatte (3) zur Wärmeübertragung verbundenen Klimamittelkanal (4) aufweist, mit zumindest einem Schallabsorber (15), der sich parallel zu der Wärmetauscherplatte (3) erstreckt, und mit zumindest einer Luftstromerzeugungseinrichtung (18). Es ist vorgesehen, dass der Schallabsorber (15) plattenförmig ausgebildet und derart beabstandet zu der Wärmetauscherplatte (3) angeordnet ist, dass ein Luftspalt (17) zwischen Schallabsorber (15) und Wärmetauscherplatte (3) vorliegt, und dass die Luftstromerzeugungseinrichtung (18) derart angeordnet und ausgebildet ist, dass ein von ihr erzeugbarer Luftstrom mit zumindest einem Anteil von Luft aus dem Raum (1) zumindest im Wesentlichen durch den Luftspalt (17) hindurch gefördert wird.

## Beschreibung

Die Erfindung betrifft eine Klimasegelanordnung für einen eine Decke aufweisenden Raum eines Gebäudes, mit zumindest einem Klimasegel, das eine zumindest im Wesentlichen parallel zu der Decke anordenbare oder angeordnete Wärmetauscherplatte und zumindest einen entlang der Wärmetauscherplatte geführten und mit der Wärmetauscherplatte zur Wärmeübertragung verbundenen Klimamittelkanal aufweist, mit zumindest einem Schallabsorber, der sich parallel zu der Wärmetauscherplatte erstreckt, und mit zumindest einer Luftstromerzeugungseinrichtung.

Weiterhin betrifft die Erfindung einen Raum eines Gebäudes, insbesondere Wohnraum oder Arbeitsraum, der zumindest eine Seitenwand, eine zumindest im Wesentlichen horizontal ausgerichtete Decke, insbesondere Betondecke, sowie einen beabstandet zu der Decke angeordneten Boden aufweist.

Klimasegelanordnungen der eingangs genannten Art sind aus dem Stand der Technik bekannt. Klimasegel werden dazu genutzt, das Raumklima in einem Raum vorteilhaft zu beeinflussen. Dabei wirken Klimasegel als Wärmetauscher, die Wärme aus dem Raum aufnehmen oder Wärme in den Raum abgeben. Dazu weist ein herkömmliches Klimasegel eine Wärmetauscherplatte auf, die aus einem Material gefertigt ist, das einen vorteilhaften Wärmeleitkoeffizienten aufweist, der also eine gute Wärmestrahlung sowie einen guten Wärmeübertragung beziehungsweise einen guten Wärmeübergang von der Umgebungsluft in die Wärmetauscherplatte und andersherum gewährleistet. An einer derartigen Wärmetauscherplatte ist außerdem ein Klimamittelkanal angeordnet, durch welchen ein Klimamittel, insbesondere ein flüssiges oder gasförmiges Klimamittel, gefördert werden kann. Der Klimamittelkanal ist an der Wärmetauscherplatte die Wärmetauscherplatte zur Wärmeübertragung berührend angeordnet, um einen guten Wärmeübergang von dem Klimamittel durch den Klimamittelkanal in die Wärmetauscherplatte und andersherum zu ermöglichen. Je nachdem, ob ein kaltes oder warmes Klimamittel, also insbesondere ein Kühlmittel oder ein Wärmemittel, durch den Klimamittelkanal gefördert wird, dient das Klimasegel zum Kühlen oder Erwärmen des Raums. Mittels einer zusätzlichen Luftstromerzeugungseinrichtung wird außerdem üblicherweise ein Luftstrom in den Raum gefördert, durch welchen die in dem Raum befindliche Luftmenge umgewälzt oder ausgetauscht wird, wobei in Zusammenwirkung mit dem Klimasegel ein vorteilhaftes Raumklima zeitnah in dem Raum einstellbar ist. Bekannte Luftströmerzeugungseinrichtungen stellen ein Luftstrom bereit, indem sie diesen entweder beispielsweise mittels eines Ventilators erzeugen oder einen extern erzeugten Luftstrom, der beispielsweise von einer zentralen Primärlufteinrichtung des Gebäudes bereitgestellt wird, in den Raum lenken und/oder den bereitgestellten Luftstrom mithilfe einer oder mehrerer verstellbareren Luftleitelemente, wie beispielsweise Luftleitlamellen oder -klappen, lenkt und/oder durch Verschließen und Freigeben eines Durchströmungsquerschnitts unterbrechen oder freigeben.

Des Weiteren ist es bekannt, derartige Klimasegel außerdem auch zur Schalldämpfung in dem Raum zu nutzen. So sind Klimasegel bekannt, die eine Schalldämpfung verwenden, welche das Verbreiten von Schall in dem Raum verhindern oder zumindest erschweren soll. So sind bekannte Klimasegel mit einer Schalldämpfung versehen, die den Schall im Raum dämpfen sollen. So offenbart beispielsweise das Gebrauchsmuster DE 295 12 106 U1 ein Kühl- und Heizelement einer Wärmetauscherplatte, die schallschluckend ausgebildet ist. Auch die Offenlegungsschrift WO 2015/063578 A1 offenbart eine Klimasegelanordnung, bei welcher oberhalb des Klimasegels ein Gehäuse mit einer Luftstromerzeugungseinrichtung angeordnet ist, wobei das Gehäuse eine Schalldämmung aufweist, die verhindern soll, dass Geräusche aus dem Gehäuse in den Raum dringen. In der Gebrauchsmusterschrift DE 295 19 366 U1 wird außerdem zum Stand der Technik eine Klimasegeleinrichtung beschrieben, bei welcher in einen Raumbereich zwischen Klimasegel und Decke ein raumschallabsorbierendes Dämmmaterial eingelegt wird. Dabei wird das Dämmmaterial auf das Klimasegel aufgelegt, sodass Raumschall, der insbesondere von der Betondecke reflektiert wird, vorteilhaft absorbiert wird.

Die Leistungsfähigkeit herkömmlicher Klimasegel wird unter anderem durch einen Tau- oder Kondensationspunkt begrenzt, der dann überschritten wird, wenn die Wärmetauscherplatte derart weit herabgekühlt ist, dass an der Unterseite der Wärmetauscherplatte, also dem Boden des Raums zugewandt, Kondensat entsteht, das dann heruntertropfen könnte. Um dies zu vermeiden, wird üblicherweise die Leistung des Klimasegels, insbesondere die Kühlung der Wärmetauscherplatte durch das verwendete Kühlmittel begrenzt. Leistungssteigerungen können sich noch aus unterschiedlichen Bauformen der Wärmetauscherplatte ergeben. Insgesamt steht jedoch baubedingt nur ein schmales Leistungsspektrum zur Verfügung.

Der vorliegenden Erfindung liegt die Aufgabe zugrunde, eine verbesserte Klimasegelanordnung zu schaffen, die eine höhere Leistungsfähigkeit ohne Komforteinbußen in Bezug auf die Schalldämpfung bietet.

Die der Erfindung zugrundeliegende Aufgabe wird durch eine Klimasegelanordnung mit den Merkmalen des Anspruchs 1 gelöst. Diese hat den Vorteil, dass die Wärmetauscherplatte mit einem Luftstrom beaufschlagt wird, und zwar auf der Oberseite, welche der Decke beziehungsweise dem Schallabsorber zugewandt ist. Dadurch wird die Leistung der Wärmetauscherplatte erhöht. Insbesondere wird durch die erfindungsgemäße Ausbildung der Klimasegelanordnung ermöglicht, die Wärmetauscherplatte mit einem Luftstrom zu beaufschlagen, welcher den Wärmeübergang an der dem Raum zugewandten Klimaseite der Wärmetauscherplatte verbessert, sodass hierdurch insgesamt die Leistung der Klimasegelanordnung ohne Kondensatbildung erhöht wird. Hierzu ist erfindungsgemäß vorgesehen, dass der Schallabsorber plattenförmig ausgebildet und derart beabstandet zu der Wärmetauscherplatte angeordnet ist, dass ein Luftspalt zwischen Schallabsorber und Wärmetauscherplatte vorliegt, und dass die Luftstromerzeugungseinrichtung derart angeordnet und ausgebildet ist, dass ein von ihr erzeugbarer Luftstrom mit zumindest einem Anteil von Luft aus dem Raum selbst zumindest im Wesentlichen durch den Luftspalt hindurch gefördert wird, insbesondere derart, dass der Luftstrom an einem von der Luftstromerzeugungseinrichtung abgewandten Ende der Klimasegelanordnung beziehungsweise der Wärmetauscherplatte in den Raum, insbesondere unterhalb der Wärmetauscherplatte, gelangt. Der von der Luftstromerzeugungseinrichtung bereitgestellte Luftstrom gelangt somit zwischen Schallabsorber und Wärmetauscherplatte und beaufschlagt somit die Rückseite der Wärmetauscherplatte, welche dem Schallabsorber zugewandt ist. Insbesondere beaufschlagt der Luftstrom die Wärmetauscherplatte noch bevor er in den Raum unterhalb der Wärmetauscherplatte gelangt. Dadurch, dass der Luftstrom zumindest anteilig von Luft aus dem Raum selbst gebildet wird, wird in der Regel ein erwärmter Luftstrom auf die Wärmetauscherplatte in dem Luftspalt treffen. Durch die erfindungsgemäße Ausbildung wird damit erreicht, dass die Wärmetauscherplatte etwas erwärmt und dadurch der Wärmeübergang, insbesondere im Kühlbetrieb aus der Raumluft in das Klimamittel verbessert und damit das zuvor genannte Leistungsspektrum einer herkömmlichen Wärmetauscherplatte deutlich erhöht wird. Durch die vorteilhafte Beaufschlagung der Wärmetauscherplatte mit dem durch die Raumluft beeinflussten Luftstrom in dem Luftspalt wird insbesondere die Oberflächentemperatur der Wärmetauscherplatte derart beeinflusst, dass der Abstand zu dem Taupunkt beziehungsweise dem Kondensationspunkt vorteilhaft vergrößert wird, sodass die Leistungsfähigkeit der Wärmetauscherplatte beispielsweise durch eine weitere Reduktion der Temperatur des Kühlmittels weiter erhöht werden kann, ohne dass Kondensat an der Wärmetauscherplatte entsteht.

Gemäß einer bevorzugten Weiterbildung der Erfindung ist die Luftstromerzeugungseinrichtung eine Primärluftzuführeinrichtung. Die Primärluftzuführeinrichtung führt Frischluft zu, insbesondere klimatisierte, vorzugsweise gekühlte Frischluft, und ist dazu insbesondere mit einem außerhalb des Raums liegenden Zuluftanschluss, der beispielsweise an eine zentrale Primärluftzuführvorrichtung angeschlossen oder anschließbar ist, verbunden. Dadurch wird mittels der Luftstromerzeugungseinrichtung Frischluft zwischen den Schallabsorber und die Wärmetauscherplatte gefördert. Durch die optionale Klimatisierung der Primärluft beziehungsweise Frischluft ist eine Effizienzsteigung des Klimasegels sowohl im Kühlbetrieb als auch im Heizbetrieb möglich.

Besonders bevorzugt ist die Luftstromerzeugungseinrichtung seitlich beabstandet zu dem Klimasegel angeordnet, sodass zwischen dem Klimasegel und der Luftstromerzeugungseinrichtung eine dem Raum zugeordnete Raumluftöffnung gebildet ist. Die Luftstromerzeugungseinrichtung ist somit nicht direkt an oder auf dem Klimasegel angeordnet, sondern beabstandet dazu. Durch diesen Abstand wird ein Spalt zwischen Klimasegel und Luftstromerzeugungseinrichtung geschaffen, der die Raumluftöffnung bildet. Die Raumluftöffnung verbindet den Raum unterhalb des Klimasegels mit dem Strömungsweg der von der Luftstromerzeugungseinrichtung bereitgestellten Luft in den Luftspalt, sodass im Betrieb der Luftstromerzeugungseinrichtung durch Sog oder Induktion Raumluft von unterhalb des Klimasegels durch den in den Luftspalt geförderten Luftstrom angesaugt und in den Luftspalt mittransportiert wird. Hierdurch wird sichergestellt, dass Raumluft die der Decke zugewandte Oberseite der Wärmetauscherplatte beaufschlagt, sodass die oben beschriebene Leistungssteigerung ermöglicht ist. Dabei ergibt sich außerdem der Vorteil, dass von der Luftstromerzeugungseinrichtung bereitgestellte Frischluft oder Primärluft bevorzugt nicht nur in den Luftspalt gelangt, sondern zumindest teilweise auch direkt in den Raum, sodass die bereits klimatisierte Primärluft das Raumklima auch direkt beeinflusst.

Gemäß einer bevorzugten Weiterbildung der Erfindung weist die Luftstromerzeugungseinrichtung zumindest eine dem Luftspalt zugewandte Induktionsdüse auf. Durch die Induktionsdüse wird der von der Luftstromerzeugungseinrichtung bereitgestellte Luftstrom gezielt mit erhöhter Geschwindigkeit in den Luftspalt geleitet. Weil die Induktionsdüse außerdem die Strömungsgeschwindigkeit des Luftstroms erhöht, wird der zuvor genannte Sog erzeugt, welcher gewährleistet, dass Raumluft durch die Raumluftöffnung ebenfalls in den Luftspalt getrieben wird und dadurch den insbesondere kalten Luftstrom der Lufststromerzeugungseinrichtung, erwärmt.

Weiterhin ist bevorzugt vorgesehen, dass der Schallabsorber beabstandet zu der Decke angeordnet beziehungsweise anordenbar ist. Dadurch wird erreicht, dass oberhalb des Schallabsorbers beziehungsweise auf der von der Wärmetauscherplatte abgewandten Seite des Schallabsorbers ein Raumbereich beziehungsweise Freiraum entsteht, durch welchen Luft strömen und sich beispielsweise an der Decke des Raums erwärmen oder abkühlen kann.

Weiterhin ist bevorzugt vorgesehen, dass die Luftstromerzeugungseinrichtung zumindest einen ansteuerbaren Ventilator aufweist, der insbesondere saugseitig mit einem Raumbereich auf der von der Wärmetauscherplatte abgewandten Seite des Schallabsorbers verbunden ist. Der Ventilator ist bevorzugt alternativ oder zusätzlich zu der Primärluftzuführeinrichtung vorhanden. Durch den Ventilator wird Luft nicht aus dem Raum unterhalb des Klimasegels angesaugt, sondern aus dem Bereich zwischen dem Schallabsorber und der Decke des Raums. Handelt es sich bei der Decke um eine Betondecke, die beispielsweise wärmer als der Luftstrom ist, so wird der Luftstrom, der an dieser vorbeiströmt, aufgewärmt und gelangt durch den Ventilator in den Luftspalt, um die Wärmetauscherplatte wie zuvor beschrieben zu beaufschlagen. Damit wird der gleiche oder ein ähnlicher Effekt erzeugt, wie mit der Primärluftzuführeinrichtung, die seitlich beabstandet zu dem Klimasegel angeordnet ist.

Weiterhin ist bevorzugt vorgesehen, dass das Klimasegel zumindest ein Halteelement aufweist, an welchem der Schallabsorber beabstandet zu dem Klimasegel gehalten ist. Das Klimasegel weist somit selbst Mittel zum Anordnen und Ausrichten des Schallabsorbers auf. Insbesondere ist das Halteelement oder sind bevorzugt die Halteelemente des Klimasegels derart ausgebildet, dass der Schallabsorber beabstandet und parallel zu der Wärmetauscherplatte gehalten ist, sodass der zuvor genannte Luftspalt dauerhaft vorhanden ist.

Weiterhin ist bevorzugt vorgesehen, dass das Halteelement als Wärmetauscherelement ausgebildet und mit der Wärmetauscherplatte wärmeleitend verbunden ist. Das Halteelement bildet somit selbst eine wärmeleitende Struktur, durch welche insbesondere die zum Wärmetausch genutzte Oberfläche des Wärmetauscherelements vergrößert wird. Damit wird durch das Halteelement sowohl die Leistungsstärke der Wärmetauscherplatte erhöht als auch eine kompakte Halterung für den Schallabsorber gebildet. Insbesondere weist das Klimasegel wenigstens drei, vorzugsweise mehr als drei Halteelemente auf, die über den Umfang der Wärmetauscherplatte verteilt angeordnet sind, um den Schallabsorber stabil zu halten.

Besonders bevorzugt erstreckt sich die Wärmetauscherplatte über eine Fläche, die kleiner ist als die Fläche der Decke des Raums, sodass die Wärmetauscherplatte seitlich beabstandet zu Seitenwänden des Raums in dem Raum angeordnet ist. Durch den seitlichen Abstand der Wärmetauscherplatte zu den Seitenwänden ergeben sich Raumluftöffnungen beziehungsweise Durchströmungsöffnungen, durch welche Raumluft nach oben oder insbesondere durch die Luftstromerzeugungseinrichtung bereitgestellte Luft nach unten in den Raum strömen kann. Besonders bevorzugt ist vorgesehen, dass die Wärmetauscherplatte derart ausgebildet ist, dass sie seitlich beabstandet zu einer Seitenwand angeordnet ist, die bevorzugt eine Zimmertür aufweist, und seitlich beabstandet zu der dieser Seitenwand gegenüberliegenden Seitenwand, die insbesondere ein Fenster oder dergleichen aufweist. Dadurch ergibt sich im Betrieb eine Luftstromwalze in dem Raum, die eine vorteilhafte Klimatisierung sowie eine vorteilhafte Luftdurchmischung mit der Primärluft ermöglicht.

Gemäß einer bevorzugten Weiterbildung der Erfindung ist die Luftstromerzeugungseinrichtung in oder an einer der Seitenwände angeordnet. Damit ist die Lufterzeugungseinrichtung nicht an dem Klimasegel selbst befestigt, sondern an einer der Seitenwände. Dies hat den Vorteil, dass externe Zuführleitungen zu den Luftstromerzeugungseinrichtungen durch die Seitenwand geführt werden können und nicht in dem Raum selbst in Erscheinung treten. Dies vereinfacht darüber hinaus die Montage der Klimasegelanordnung sowie die Herstellung des Raums insgesamt. Darüber hinaus ist dadurch einfach der gewünschte Abstand zwischen dem Klimasegel und der Seitenwand zum Bilden der Raumluftluftöffnung darstellbar. Optional ist in oder an der Seitenwand außerdem eine Ablufteinrichtung oder Abluftöffnung angeordnet, durch welche Raumluft aus dem Raum austreten kann. Die Ablufteinrichtung ist dabei unterhalb der Luftstromerzeugungseinrichtung angeordnet und insbesondere unterhalb des Klimasegels, sodass ein vorteilhafter Luftaustausch in dem Raum stattfinden kann, ohne dass dadurch die zuvor beschriebene Leistungssteigerung des Klimasegels beeinträchtigt wird.

Gemäß einer alternativen Ausführungsform der Erfindung ist die Luftstromerzeugungseinrichtung an dem Klimasegel selbst angeordnet. Das bedeutet, dass das Klimasegel die Luftstromerzeugungseinrichtung selbst trägt. Dadurch wird eine kompakte Baueinheit geboten, die einen einfachen Transport der gesamten Klimasegelanordnung sowie eine einfache Montage in einen beliebigen Raum eines Gebäudes ermöglicht. Insbesondere ist dies dann der Fall, wenn die Luftstromerzeugungseinrichtung den bereits genannten Ventilator aufweist. Ist die Luftstromerzeugungseinrichtung als Primärluftzuführeinrichtung ausgebildet, so ist sie bevorzugt in oder an der Seitenwand des Raums angeordnet.

Weiterhin ist bevorzugt der Luftstromerzeugungseinrichtung gegenüberliegend an dem Klimasegel und/oder an dem Schallabsorber zumindest ein Luftleitelement zugeordnet und dazu ausgebildet, den von der Luftstromerzeugungseinrichtung erzeugbaren Luftstrom in den Luftspalt zwischen Schallabsorber und Wärmetauscherplatte zu führen. Das Luftleitelement weist beispielsweise einen schräg zur Hauptströmungsrichtung des Primärluftstroms ausgerichteten Abschnitt auf, der sich nach oben oder unten von dem Schallabsorber oder der Wärmetauscherplatte erstreckt, um den Luftstrom der Luftstromerzeugungseinrichtung "einzufangen" und gezielt in den Luftspalt zu leiten. Insbesondere ist zumindest dem Schallabsorber ein entsprechendes Luftleitelement zugeordnet, welches sich schräg nach oben, also in Richtung der Decke, erstreckt, um zu verhindern, dass der von der Luftstromerzeugungseinrichtung bereitgestellte Luftstrom an die Decke gelangt oder oberhalb des Schallabsorbers entlang strömt. Dadurch wird die Effizienz der Klimasegelanordnung optimiert.

Weiterhin ist der Luftstromerzeugungseinrichtung bevorzugt zumindest eine Kühleinrichtung zum Kühlen des erzeugbaren Luftstroms und/oder von Raumluft zugeordnet. Bei Bedarf ist es damit möglich, die Temperatur des Luftstroms und/oder der aus dem Raum induzierten Raumluftstroms weiter herunter zu kühlen, um das Raumklima beispielsweise schneller einzustellen oder stärker zu beeinflussen.

Gemäß einer bevorzugten Weiterbildung der Erfindung ist unterhalb der Luftstromerzeugungseinrichtung und/oder unterhalb der Wärmetauscherplatte eine Ablufteinrichtung in/an der Seitenwand angeordnet. Durch die Anordnung der Ablufteinrichtung unterhalb der Luftstromerzeugungseinrichtung und insbesondere der Wärmetauscherplatte wird ein Austausch der in dem Raum befindlichen Luft ermöglicht, ohne dass dadurch die Leistungsfähigkeit der Klimasegelanordnung beeinträchtigt wird.

Weiterhin ist bevorzugt vorgesehen, dass die Luftstromerzeugungseinrichtung und die Ablufteinrichtung in einem gemeinsamen Gehäuse angeordnet sind. Dadurch wird die Montage der Klimasegelanordnung vereinfacht. Außerdem wird dadurch eine einfache Wartung von Luftstromerzeugungseinrichtung und Ablufteinrichtung gewährleistet. Vorzugsweise weist die Ablufteinrichtung zumindest eine dem Raum zugewandte Einlassöffnung für die Raumabluft auf. Optional weist die Ablufteinrichtung wenigstens einen ansteuerbare Luftfördereinrichtung auf, um ein aktives ablüften zu ermöglichen, und/oder zumindest eine verstellbare Klappe zum Freigeben und Verschließen der Einlassöffnung, um einen Abluftstrom zu kontrollieren.

Der erfindungsgemäße Raum mit den Merkmalen des Anspruchs 16 zeichnet sich durch zumindest eine Klimasegelanordnung aus, wie sie vorstehend beschrieben wurde. Es ergeben sich dadurch für den Raum die bereits genannten Vorteile.

Weitere Vorteile und bevorzugte Merkmale und Merkmalskombinationen ergeben sich insbesondere aus dem zuvor Beschriebenen sowie aus den Ansprüchen. Im Folgenden soll die Erfindung anhand der Zeichnungen näher erläutert werden. Dazu zeigen
- Figur 1: einen Raum mit einer vorteilhaften Klimasegelanordnung gemäß einem ersten Ausführungsbeispiel,
- Figur 2: den Raum mit der Klimasegelanordnung gemäß einem zweiten Ausführungsbeispiel,
- Figur 3: den Raum mit der Klimasegelanordnung gemäß einem dritten Ausführungsbeispiel,
- Figur 4: den Raum mit der Klimasegelanordnung gemäß einem vierten Ausführungsbeispiel,
- Figur 5: den Raum mit einer Klimasegelanordnung gemäß einem fünften Ausführungsbeispiel, und
- Figur 6: den Raum mit einer Klimasegelanordnung gemäß einem sechsten Ausführungsbeispiel.

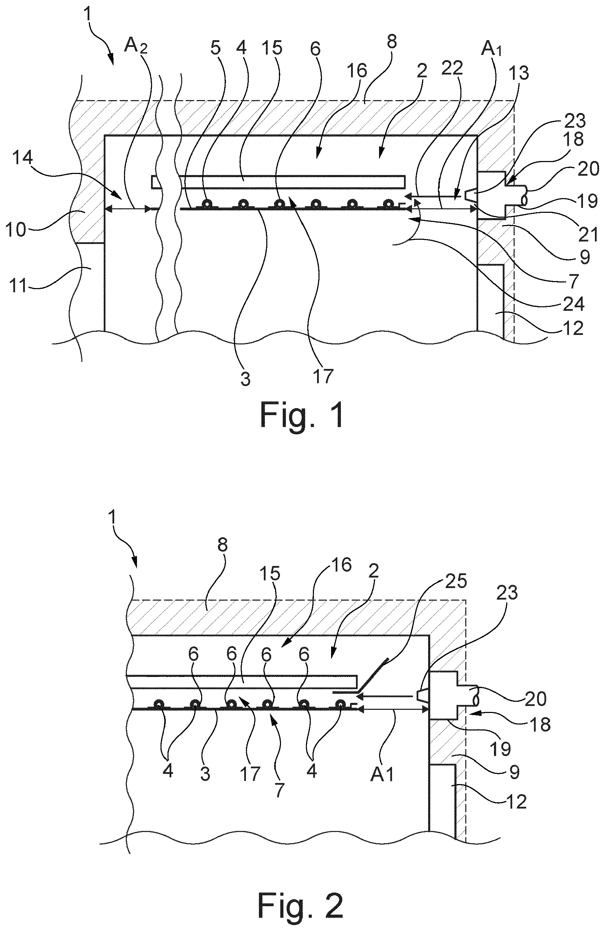

Figur 1 zeigt in einer vereinfachten Schnittdarstellung einen vorteilhaften Raum 1 eines Gebäudes, der eine vorteilhafte Klimasegelanordnung 2 aufweist.

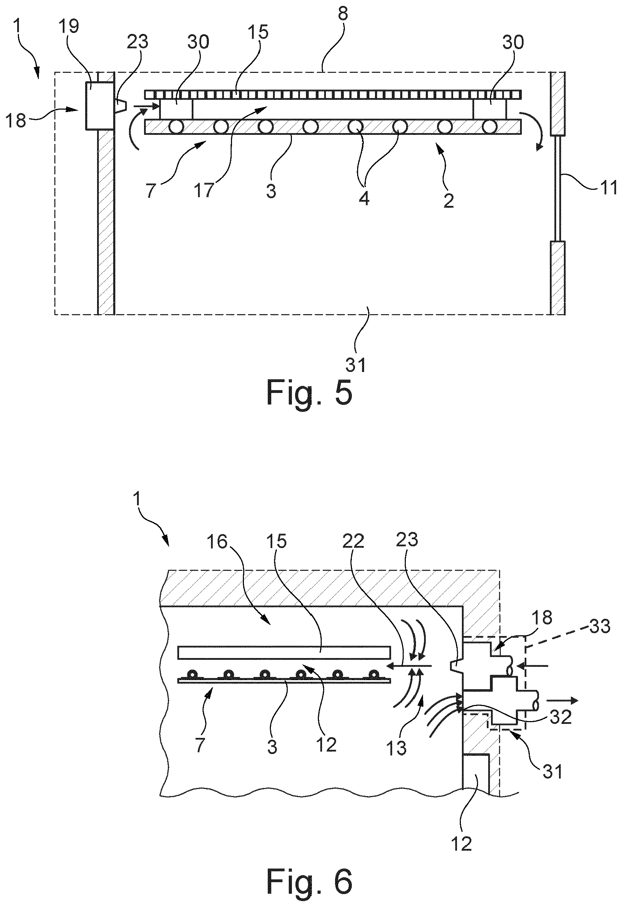

Die Klimasegelanordnung 2 weist eine Wärmetauscherplatte 3 auf, die aus einem Material mit höher Wärmeleitfähigkeit, wie beispielsweise Aluminium, Stahl oder Kupfer, gefertigt ist. Auf einer Oberseite 5 der Wärmetauscherplatte 3 ist ein Klimamittelkanal 4 angeordnet, der entlang der Oberseite 5 der Wärmetauscherplatte 3 mäanderförmig verläuft, sodass sich der Klimamittelkanal 4 zumindest im Wesentlichen über eine Oberseite 5 der Wärmetauscherplatte 3 erstreckt. Der Klimamittelkanal 4 weist einen hier nicht gezeigten Zulaufanschluss sowie einen Ablaufanschluss auf, die mit einer ansteuerbaren Klimaanlage verbindbar sind, um ein Klimamittel durch den Klimamittelkanal 4 zu fördern. Bei dem Klimamittel kann es sich um ein Kühlmittel oder um ein Wärmemittel handeln. Der Klimamittelkanal 4, der vorzugsweise aus Aluminium oder Kupfer gefertigt ist, ist dabei entlang seiner Längserstreckung wärmetechnisch an die Wärmetauscherplatte 3 angekoppelt. Insbesondere ist dazu der Wärmemittelkanal 4 berührend an der Wärmetauscherplatte 3 entlang seiner Längserstreckung angeordnet, sodass ein vorteilhafter Wärmeübergang von dem durch den Klimamittelkanal 4 geförderten Klimamittel durch den Klimamittelkanal in die Wärmetauscherplatte 3 gewährleistet ist. Gemäß dem vorliegenden Ausführungsbeispiel ist der Klimamittelkanal 4 durch Schellen 6, welche den Klimamittelkanal 4 an mehreren Stellen beabstandet zueinander umgreifen, an der Wärmetauscherplatte 3 befestigt. Die Schellen 6 sind insbesondere auch aus einem wärmeleitfähigen Material gefertigt, sodass auch hierüber ein vorteilhafter Wärmeübergang erfolgt. Alternativ, und wie beispielhaft in Figur 5 gezeigt, ist der Kühlmittelkanal 4 in die Wärmetauscherplatte 3 integriert ausgebildet, sodass ein noch weiter verbesserter Wärmeübergang geboten wird.

Durch das Fördern eines Klimamittels durch den Klimakanal 4 wird die Wärmetauscherplatte 3 temperiert, sodass sie Wärme in den Raum abgibt oder Wärme aus dem Raum aufnimmt und mittels des Klimamittels, insbesondere Kühlmittel, aus dem Raum abführt. Die Wärmetauscherplatte 3 bildet daher zusammen mit dem Klimakanal 4 ein sogenanntes Klimasegel 7.

Das Klimasegel 7 ist parallel zu einer Decke 8 des Raums 1 angeordnet. Der Raum 1 weist außerdem zumindest zwei einander gegenüberliegende Seitenwände 9 und 10 auf, zwischen denen sich die Decke 8 und gegenüberliegend von der Decke 8 ein hier nicht gezeigter Boden erstrecken. Optional ist die Decke 8 aus Beton gefertigt. In der Seitenwand 10 können beispielsweise außerdem ein oder mehrere Fenster 11 und in der Seitenwand 9 eine oder mehrere Türen 12 angeordnet sein.

Das Klimasegel 7 ist insbesondere an der Decke 8 oder an den Seitenwänden 9 durch ein oder mehrere Träger gehalten. Dabei erstreckt sich das Klimasegel 3 über eine Fläche parallel zu der Decke 8, die kleiner ist als die Fläche der Decke 8, sodass zumindest zu den Seitenwänden 9 und 10 jeweils ein seitlicher Abstand A1, A2 verbleibt, durch welchen jeweils eine Raumluftöffnung 13 beziehungsweise 14 gebildet ist. Durch die Raumluftöffnungen 13, 14 kann Luft aus dem Inneren des Raums 1 an dem Klimasegel 7 vorbei in Richtung der Beton-Decke 8 gelangen oder aus dem Raumbereich oberhalb des Klimasegels 7 nach unten in den Raum 1. Bevorzugt beträgt der Abstand A1, optional auch der Abstand A2, eine Weite von 1 bis 700 mm, vorzugsweise von 300 bis 600 mm.

Zwischen dem Klimasegel 7 und der Decke 8 ist außerdem ein Schallabsorber 15 der Klimasegelanordnung 2 angeordnet. Der Schallabsorber 15 ist plattenförmig ausgebildet und parallel zu dem Klimasegel 7 beziehungsweise der Wärmetauscherplatte 3 sowie zu der Decke 8 ausgerichtet. Dabei ist auch der Schallabsorber 15 beabstandet zu der Decke 8 angeordnet, sodass zwischen Schallabsorber 15 und Decke 8 ein Raumbereich 16 mit einem Luftvolumen vorliegt. Außerdem ist der Schallabsorber 15 beabstandet zu dem Klimasegel 7 angeordnet, sodass zwischen dem Klimasegel 7 und dem Schallabsorber 15 ein Luftspalt 17 gebildet ist.

Weiterhin weist die Klimasegelanordnung 7 eine Luftstromerzeugungseinrichtung 18 auf. Gemäß dem vorliegenden Ausführungsbeispiel ist die Luftstromerzeugungseinrichtung 18 als Primärzulufteinrichtung 19 ausgebildet, die in der Seitenwand 9 auf Höhe des Klimasegels 7 angeordnet ist. Die Primärzulufteinrichtung 19 ist durch einen Primärzuluftanschluss 20 beispielsweise mit einer zentralen Primärlufteinheit des Gebäudes verbindbar oder verbunden. Ein Auslass 21 der Primärzulufteinrichtung 19 ist dem Luftspalt 17 zugewandt, um durch die Primärlufteinrichtung 19 bereitgestellte Primärluft in Form eines Luftstroms in den Luftspalt 17 zu führen, wie durch einen Pfeil 22 angezeigt. Zur verbesserten Führung des Luftstroms wird der Auslass 21 der Primärzulufteinrichtung 19 beispielsweise durch eine Induktionsdüse 23 der Primärzulufteinrichtung 19 gebildet.

Wird durch die Primärzulufteinrichtung 19 der Luftstrom wie beschrieben erzeugt beziehungsweise bereitgestellt, so entsteht durch die Induktionswirkung aufgrund der hohen Strömungsgeschwindigkeit des Luftstroms ein auf die Raumluftöffnung 13 wirkender Sog, durch welchen Raumluft aus dem Raum 1 unterhalb der Wärmetauscherplatte 3 und oberhalb des Schallabsorbers 15 angesogen und in den Luftspalt 17 mittransportiert wird, wie durch einen Pfeil 24 angezeigt. Die klimatisierte Primärluft wird damit bereits vor dem Eintritt in den Luftspalt 17 mit der Raumluft 17 vermengt, sodass der Luftstrom, welcher auf die Oberseite 5 der Wärmetauscherplatte 3 trifft, "temperiert" wird.

Im Kühlbetrieb wird durch die Primärzulufteinrichtung 19 ein gekühlter Frischluftstrom bereitgestellt, der dann mit der vergleichsweisen warmen Raumluft vermengt und in den Luftspalt 17 eingeführt wird. Damit wird die Wärmetauscherplatte 3 auf ihrer Oberseite nicht mit dem kalten Frischluftstrom beaufschlagt, sondern mit einem durch die Raumluft erwärmten Luftstrom. Dadurch wird das Betriebsverhalten der Wärmetauscherplatte 3 positiv beeinflusst, weil dadurch ein Wärmeübergang von der Wärmetauscherplatte 3 in die Raumluft oder andersherum verbessert wird. Im Kühlbetrieb wird ein Kühlmittel durch den Klimakanal 4 gefördert, sodass die Wärmetauscherplatte 3 Wärme aus dem Raum aufnehmen und mittels des Kühlmittels aus dem Raum abführen kann. Durch das Beaufschlagen der Oberseite 5 mit dem durch die Raumluft erwärmten Frischluftstrom wird erreicht, dass die Kühlmitteltemperatur des Klimamittels weiter reduziert werden kann, ohne dass Kondensat an der Außenseite der Wärmetauscherplatte 3 entsteht.

Herkömmliche Klimasegel sind in ihrer Leistungsfähigkeit durch den Kondensationspunkt begrenzt, zu welchem ein Kondensat beziehungsweise Tau an der Oberfläche der Wärmetauscherplatte entsteht, weil die warme Luft an der Wärmetauscherplatte aufgrund der niedrigen Temperatur der Wärmetauscherplatte kondensiert. Damit ist eine Kühlmitteltemperatur begrenzt, um die Entstehung von Kondensat in dem Raum zu vermeiden. Durch die vorteilhafte Ausbildung der Klimasegelanordnung 7, wie sie vorstehend beschrieben wurde, wird erreicht, dass diese Kühlmitteltemperatur weiter reduziert und dadurch die Leistungsfähigkeit des Klimasegels 7 insgesamt erhöht wird.

Figur 2 zeigt ein zweites Ausführungsbeispiel der vorteilhaften Klimasegelanordnung 2 des Raums 1. Aus dem ersten Ausführungsbeispiel bereits bekannte Elemente sind mit den gleichen Bezugszeichen versehen, sodass insofern auf die obenstehende Beschreibung verwiesen wird. Entsprechendes gilt auch für die weiteren Figuren. Im Folgenden sollen im Wesentlichen nur die Unterschiede der Ausführungsbeispiele näher erläutert werden.

Gemäß dem zweiten Ausführungsbeispiel ist dem Luftspalt 17 ein Luftleitelement 25 zugeordnet, das der Primärluftzufuhreinrichtung 19 gegenüberliegt und von dem Schallabsorber 15 aus schräg nach oben in Richtung der Decke 8 des Raums 1 führt. Das Luftleitelement 25 ist dazu ausgebildet, den Luftstrom der Primärluftzuführeinrichtung 19 gezielt in den Luftspalt 17 zu führen und insbesondere daran zu hindern, oberhalb des Schallabsorbers 15 in den Raumbereich 16 zu gelangen. Dadurch wird die Effizienz des Klimasegels 7 weiter erhöht, insbesondere wird vermieden, dass sich die klimatisierte Frischluft in dem Raumbereich 16 erwärmt oder kühlt, bevor sie in den Raumbereich unterhalb des Klimasegels 7 gelangt oder in den Luftspalt 17. Insbesondere wird durch das Luftleitelement 25 erreicht, dass der Luftstrom entweder in den Klimaspalt 17 oder teilweise direkt in den Raum unterhalb des Klimasegels 7 gelangt, um dort die Temperatur des Raumklimas direkt zu beeinflussen. Dabei wird einerseits die Leistungsfähigkeit des Klimasegels 7 erhöht und gleichzeitig das Raumklima durch die Frischluft direkt positiv beeinflusst.

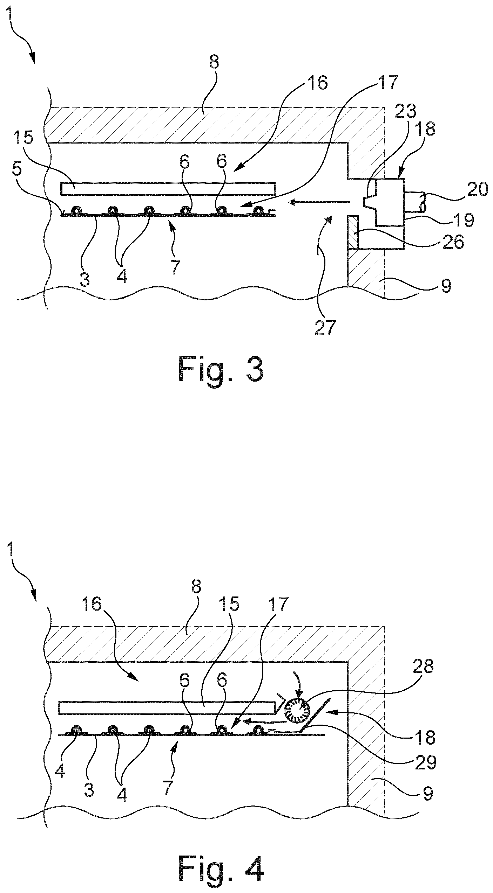

Figur 3 zeigt ein drittes Ausführungsbeispiel, das sich von dem ersten Ausführungsbeispiel dadurch unterscheidet, dass der Primärluftzuführeinrichtung 19 eine Kühleinrichtung 26 zugeordnet ist, mittels welcher der Primärzuführeinrichtung 19 zugeführte Frischluft oder, wie in Figur 3 gezeigt, Raumluft gekühlt werden kann, bevor sie mittels der Induktionswirkung der Primärluftzuführeinrichtung 19 in den Luftspalt 17 gefördert wird. Wie in Figur 3 gezeigt, wird dabei beispielsweise zumindest ein Teil der Raumluft gemäß Pfeil 27 durch die Kühleinrichtung 26 gesogen und dann zusammen mit dem Frischluftstrom in den Luftspalt 7 gefördert. Durch das Vorsehen der Kühleinrichtung 26 wird erreicht, dass zumindest ein Teil der Raumluft gekühlt wird, bevor er mit dem Frischluftstrom vermengt wird, sodass beispielsweise ein zu starkes Erwärmen der Wärmetauscherplatte 3 in dem Luftspalt 17 vermieden wird.

Figur 4 zeigt ein viertes Ausführungsbeispiel, das sich von den vorhergehenden Ausführungsbeispielen dadurch unterscheidet, dass die Luftstromerzeugungseinrichtung 18 nicht als Primärluftzuführeinrichtung, sondern als Ventilator 28 ausgebildet ist. Der Ventilator 28 ist dabei saugseitig mit dem Raumbereich 16 oberhalb des Schallabsorbers 15 verbunden, sodass mittels des Ventilators 28 an der Wärmetauscherplatte 3 aufgestiegene warme Raumluft, die sich im oberen Bereich einer Decke 8 des Raums 1 befindet, angesaugt und dem Luftspalt 17 zugeführt, um, wie zuvor bereits beschrieben, den Wärmeübertragungskoeffizienten der Wärmetauscherplatte 3 und damit die Leistungsfähigkeit des Klimasegels 7 zu erhöhen. Dem Ventilator 28 ist optional zumindest ein Luftleitelement 29 zugeordnet, das dazu dient, dass Luft im Wesentlichen nur aus dem Raumbereich 16 angesaugt wird.

Gemäß einem weiteren, hier nicht dargestellten Ausführungsbeispiel werden die in den Ausführungsbeispielen gezeigten Luftstromerzeugungseinrichtungen 18, also die Primärluftzufuhreinrichtung 19 sowie der Ventilator 28, miteinander kombiniert, um je nach Rahmenbedingungen oder Klimabedingungen in dem Raum 1 die Leistungsfähigkeit des Klimasegels 7 optimal einstellen zu können.

Figur 5 zeigt ein weiteres Ausführungsbeispiel, das sich von dem ersten Ausführungsbeispiel lediglich dadurch unterscheidet, dass die Wärmetauscherplatte 3 einen integrierten Kühlmittelkanal 4 aufweist, sodass eine maximal große Oberfläche zur Wärmeübertragung von dem Kühlmittel in dem Kühlmittelkanal 4 in die Wärmetauscherplatte 3 und andersherum gewährleistet ist.

Optional sind an der Wärmetauscherplatte 3 mehrere Halteelemente 30 angeordnet, durch welche der Schallabsorber 15 beabstandet zu der Wärmetauscherplatte 3 an der Wärmetauscherplatte 3 gehalten ist. Insbesondere handelt es sich bei den Halteelementen 30 um Haltebleche, die sich parallel zur Luftströmungsrichtung des Luftstroms durch den Luftspalt 17 erstrecken, sodass sie die Luftdurchströmung nicht nachteilig beeinflussen, sondern vielmehr lenkend unterstützen. Vorzugsweise sind die Halteelemente 30 aus einem wärmeleitfähigen Material gefertigt und derart mit der Wärmetauscherplatte 3 verbunden, dass sie einen vorteilhaften Wärmeübergang zu der Wärmetauscherplatte 3 aufweisen. Damit wirken die Halteelemente 30 als Teil des Klimasegels 7 und vergrößern dessen Oberfläche, die zum Wärmeaustausch genutzt wird. In Figur 5 sind die Halteelemente 30 in einer Seitenansicht gezeigt. In einer Draufsicht, in Strömungsrichtung des Luftstroms durch den Luftspalt 17 gesehen, beziehungsweise im Querschnitt gesehen, sind die Halteelemente 30 bevorzugt U- oder V-förmig ausgebildet, wobei insbesondere der mittlere Bereich der U- oder V-Form auf der Wärmetauscherplatte 3 aufliegt, um einen guten Wärmeübergang zu ermöglichen.

Figur 5 zeigt außerdem auch beispielhaft einen Boden 31 des Raums 1. Zweckmäßigerweise ist die Klimasegelanordnung 2 näher zu der Decke 8 oder zu dem Boden 31 angeordnet, sodass oberhalb der Klimasegelanordnung 2 ein verhältnismäßig kleiner Raumbereich verbleibt. Optional kann der Schallabsorber 15 auch direkt an der Decke 8 angeordnet sein. Durch die von der Decke 8 beabstandete Anordnung wird jedoch der Vorteil erreicht, dass der Schallabsorber 15 optisch nicht oder kaum in Erscheinung tritt, und insbesondere von der Betondecke 8 reflektierende Schallwellen vorteilhaft absorbiert, sodass die Schalldämpfungswirkung verbessert ist. Durch den Schallabsorber 15 wird erreicht, dass Schallwellen, die in dem Raum 1 unterhalb des Klimasegels 7 entstehen, im Bereich der Decke vorteilhaft gedämpft werden. Insbesondere die von der Decke 8 reflektierenden Schallwellen werden durch den Schallabsorber 15 aufgenommen und gedämpft, sodass ein besonders hoher Komfort in dem Raum 1 sowohl in Bezug auf die Klimatisierung als auch in Bezug auf eine Geräuschentwicklung gewährleistet ist.

Figur 6 zeigt ein weiteres Ausführungsbeispiel der vorteilhaften Klimasegelanordnung 2, das sich von dem Ausführungsbeispiel von Figur 1 dadurch unterscheidet, dass zusätzlich zu der Luftstromerzeugungseinrichtung 18 eine Ablufteinrichtung 31 vorhanden ist, die eine unterhalb der Induktionsdüse 23 und unterhalb des Klimasegels 7 liegende Einlassöffnung 32 für einen Abluftstrom aufweist. Durch die Ablufteinrichtung 31 kann somit Raumluft als Abluft aus dem Raum 1 entweichen. Durch die vorteilhafte Anordnung wird erreicht, dass durch den Abluftstrom durch die Ablufteinrichtung 31 die Leistungssteigerung des Klimasegels 7, wie sie zuvor beschrieben wurde, nicht beeinträchtigt wird. Optional sind die Ablufteinrichtung 31 und die Luftstromerzeugungseinrichtung 18 in einem gemeinsamen Gehäuse 33, in Figur 6 gestrichelt gezeichnet, angeordnet.

Die obenstehend beschriebenen Varianten beziehungsweise Merkmale der vorteilhaften Klimasegelanordnung 2 können auch miteinander kombiniert werden. Insbesondere ist eine Ausbildung der Wärmetauscherplatte 3, wie sie in Figur 5 gezeigt ist, auch bei den in Figuren 1 bis 4 gezeigten Ausführungsbeispielen anwendbar. Optional bilden die Schellen 6, die den Klimakanal 4 in den Ausführungsbeispielen der Figuren 1 bis 4 an der Wärmetauscherplatte 3 arretieren, gleichzeitig die Halteelemente 30 für den Schallabsorber 15. Mit anderen Worten sind die Halteelemente 30 in die Schellen 6 bevorzugt integriert, wenn der Klimakanal 4 auf der Wärmetauscherplatte 3 aufliegt. Bevorzugt ist der Schallabsorber 15 aus Polyethylen, Holz, Zement und/oder Steinwolle gefertigt. Optional weist der Schallabsorber 15 außerdem eine Vliesummantelung auf. Auch kann der Schallabsorber 15 aus Vlies mit Polyesterfasern gefertigt sein.

## Patentansprüche

1. Klimasegelanordnung (2) für einen eine Decke (8) aufweisenden Raum (1) eines Gebäudes, mit zumindest einem Klimasegel (7), das eine zumindest im Wesentlichen parallel zu der Decke (8) anordenbare Wärmetauscherplatte (3) und zumindest einen entlang der Wärmetauscherplatte (3) geführten und mit der Wärmetauscherplatte (3) zur Wärmeübertragung verbundenen Klimamittelkanal (4) aufweist, mit zumindest einem Schallabsorber (15), der sich parallel zu der Wärmetauscherplatte (3) erstreckt, und mit zumindest einer Luftstromerzeugungseinrichtung (18), **dadurch gekennzeichnet, dass** der Schallabsorber (15) plattenförmig ausgebildet und derart beabstandet zu der Wärmetauscherplatte (3) angeordnet ist, dass ein Luftspalt (17) zwischen Schallabsorber (15) und Wärmetauscherplatte (3) vorliegt, und dass die Luftstromerzeugungseinrichtung (18) derart angeordnet und ausgebildet ist, dass ein von ihr erzeugbarer Luftstrom mit zumindest einem Anteil von Luft aus dem Raum (1) zumindest im Wesentlichen durch den Luftspalt (17) hindurch gefördert wird.

2. Klimasegelanordnung nach Anspruch 1, **dadurch gekennzeichnet, dass** die Luftstromerzeugungseinrichtung (18) eine Primärluftzuführeinrichtung (19) ist.

3. Klimasegelanordnung nach einem der vorhergehenden Ansprüche, **dadurch gekennzeichnet, dass** die Luftstromerzeugungseinrichtung (18) seitlich beabstandet zu dem Klimasegel (7) angeordnet ist, sodass zwischen dem Klimasegel (7) und der Luftstromerzeugungseinrichtung (18) eine dem Raum (1) zugeordnete Raumluftluftöffnung (13) gebildet ist.

4. Klimasegelanordnung nach einem der vorhergehenden Ansprüche, **dadurch gekennzeichnet, dass** die Luftstromerzeugungseinrichtung (18) zumindest eine dem Luftspalt (17) zugeordnete Induktionsdüse (23) aufweist.

5. Klimasegelanordnung nach einem der vorhergehenden Ansprüche, **dadurch gekennzeichnet, dass** die Luftstromerzeugungseinrichtung (18) zumindest einen ansteuerbaren Ventilator (28) aufweist.

6. Klimasegelanordnung nach einem der vorhergehenden Ansprüche, **dadurch gekennzeichnet, dass** der Schallabsorber (15) beabstandet zu der Decke (8) angeordnet ist.

7. Klimasegelanordnung nach einem der vorhergehenden Ansprüche, **dadurch gekennzeichnet, dass** das Klimasegel (7) zumindest ein Halteelement (30) aufweist, an welchem der Schallabsorber (15) beabstandet zu dem Klimasegel (7) gehalten ist.

8. Klimasegelanordnung nach einem der vorhergehenden Ansprüche, **dadurch gekennzeichnet, dass** das Halteelement (30) als Wärmetauscherelement ausgebildet und mit der Wärmetauscherplatte (3) wärmeleitend verbunden ist.

9. Klimasegelanordnung nach einem der vorhergehenden Ansprüche, **dadurch gekennzeichnet, dass** sich die Wärmetauscherplatte (3) über eine Fläche erstreckt, die kleiner ist als die Fläche der Decke (8) des Raums (1), sodass die Wärmetauscherplatte (3) seitlich beabstandet zu Seitenwänden (9,10) des Raums (1) in dem Raum (1) angeordnet ist.

10. Klimasegelanordnung nach einem der vorhergehenden Ansprüche, **dadurch gekennzeichnet, dass** die Luftstromerzeugungseinrichtung (18) in/an einer der Seitenwände (9) angeordnet ist.

11. Klimasegelanordnung nach einem der vorhergehenden Ansprüche, **dadurch gekennzeichnet, dass** die Luftstromerzeugungseinrichtung (18) an dem Klimasegel (7) angeordnet ist.

12. Klimasegelanordnung nach einem der vorhergehenden Ansprüche, **dadurch gekennzeichnet, dass** der Luftstromerzeugungseinrichtung (18) gegenüberliegend an dem Klimasegel (7) und/oder an dem Schallabsorber (15) zumindest ein Luftleitelement (25) zugeordnet und dazu ausgebildet ist, den von der Lufterzeugungseinrichtung (18) erzeugbaren Luftstrom in den Luftspalt (17) zwischen Schallabsorber (15) und Wärmetauscherplatte (3) zu führen.

13. Klimasegelanordnung nach einem der vorhergehenden Ansprüche, **dadurch gekennzeichnet, dass** der Luftstromerzeugungseinrichtung (18) zumindest einen Kühleinrichtung (26) zum Kühlen des erzeugbaren Luftstroms zugeordnet ist.

14. Klimasegelanordnung nach einem der vorhergehenden Ansprüche, **dadurch gekennzeichnet, dass** unterhalb der Luftstromerzeugungseinrichtung (18) und/oder unterhalb der Wärmetauscherplatte (3) eine Ablufteinrichtung in/an der Seitenwand (9) angeordnet ist.

15. Klimasegelanordnung nach einem der vorhergehenden Ansprüche, **dadurch gekennzeichnet, dass** die Luftstromerzeugungseinrichtung (18) und die Ablufteinrichtung (31) in einem gemeinsamen Gehäuse (33) angeordnet sind.

16. Raum (1) für ein Gebäude, insbesondere Wohnraum oder Arbeitsraum, der zumindest eine zumindest im Wesentlichen vertikal ausgerichtete Seitenwand (9,10), einen zumindest im Wesentlichen horizontal ausgerichtete Decke (8) und einen beabstandet zu der Decke (8) angeordneten Boden (31) aufweist, **gekennzeichnet durch** eine Klimasegelanordnung (2) nach einem der Ansprüche 1 bis 15.
